# EUROPÄISCHE PATENTANMELDUNG

(11) **EP 3 184 222 A1**
(43) Veröffentlichungstag der Anmeldung: **28.06.2017**
(21) Anmeldenummer: 15202110.1
(22) Anmeldetag: 22.12.2015
(51) Int. Cl.: B23D 47/02, B27B 5/06, B23Q 1/74

(54) **WERKSTÜCKBEARBEITUNGSVORRICHTUNG**

(71) Anmelder: Schelling Anlagenbau GmbH, 6858 Schwarzach (AT)
(72) Erfinder: Walch, Alexander, 6700 Stallehr (AT)
(74) Vertreter: Fechner, Thomas

(57) **Zusammenfassung**

Werkstückbearbeitungsvorrichtung (1), insbesondere Plattenaufteilanlage zum Zersägen von Platten oder Plattenstapeln, mit zumindest zwei voneinander beabstandeten Werkstückauflagetischen (10) und zumindest einem Auflageelement (30), welches in zumindest einer Betriebsstellung zur Ausbildung einer einen Zwischenraum (9) zwischen den Werkstückauflagetischen (10) zumindest bereichsweise überbrückenden Auflagefläche (42) zwischen den Werkstückauflagetischen (10) angeordnet ist, wobei das Auflageelement (30) zumindest zwei miteinander gelenkig verbundene Lamellen (31) aufweist, welche zur Ausbildung der Auflagefläche (42) entlang zumindest einer Führung (20) zumindest bereichsweise in den Zwischenraum (9) zwischen den Werkstückauflagetischen (10) einschiebbar und aus diesem herausschiebbar sind. (Fig. 1)

## Beschreibung

Die vorliegende Erfindung betrifft eine Werkstückbearbeitungsvorrichtung , insbesondere Plattenaufteilanlage zum Zersägen von Platten oder Plattenstapeln, mit zumindest zwei voneinander beabstandeten Werkstückauflagetischen und zumindest einem Auflageelement, welches in zumindest einer Betriebsstellung zur Ausbildung einer einen Zwischenraum zwischen den Werkstückauflagetischen zumindest bereichsweise überbrückenden Auflagefläche zwischen den Werkstückauflagetischen angeordnet ist.

Bei gattungsgemäßen Werkstückbearbeitungsvorrichtungen, insbesondere in Form von Plattenaufteilanlagen, werden Werkstückauflagetische eingesetzt, um die zu bearbeitenden Werkstücke während oder nach der Bearbeitung abzustützen. Dabei wird anstatt eines einzigen großen Werkstückauflagetisches häufig eine Vielzahl von voneinander beabstandeten Werkstückauflagetischen eingesetzt. Die Zwischenräume den Werkstückauflagetischen ermöglichen es dem Bediener im Bedarfsfall nahe genug an eine Bearbeitungseinrichtung, beispielsweise einer Sägeeinrichtung, der Werkstückbearbeitungsvorrichtung heranzutreten und Einstellungen, Inspektionen etc. an dieser vorzunehmen. Auch erleichtern die Zwischenräume die Handhabung von kleineren zu bearbeitenden Werkstücken durch den Bediener, da dieser näher an die Bearbeitungseinrichtung herantreten kann. Bei einem großen Zwischenraum oder bei der Bearbeitung von Werkstücken kleinerer Dimension kann es passieren, dass diese beispielsweise von einer Vorschubeinrichtung der Werkstückbearbeitungsvorrichtung in einen der Zwischenräume transportiert werden und das Werkstück dann zu Boden fällt. Dies ist für den Bediener zumindest beschwerlich, da dieser das Werkstück wieder aufheben muss. Auch können empfindliche Werkstücke oder der Bediener selbst durch den Sturz Schaden nehmen.

Im Stand der Technik sind deshalb Werkstückbearbeitungsvorrichtungen mit seitlich verfahrbaren Werkstückauflagetischen bekannt. Dadurch kann der Zwischenraum zwischen den Werkstückauflagetischen vom Bediener je nach Bedarf variiert werden. Ein Beispiel für einen solchen Werkstückauflagetisch ist in der EP 2 251 127 A1 gezeigt. Möchte der Bediener an die Bearbeitungseinrichtung herantreten, so muss er gegebenenfalls den Abstand zwischen den Werkstückauflagetischen und damit den Zwischenraum vergrößern. Da die Werkstückauflagetische häufig am Maschinentisch befestigt sind, ist dies mit entsprechendem Aufwand verbunden.

Weiters sind durch Vorbenutzung Einlegeelemente bekannt, welche zur Ausbildung einer Auflagefläche zwischen zwei Werkstückauflagetischen angeordnet werden können. Diese können vom Bediener händisch eingelegt oder eingehängt und im Bedarfsfall wieder entfernt werden. Je nach Größe des zu überbrückenden Zwischenraumes können diese Einlegeelemente groß und schwer sein, sodass deren Handhabung aufwändig ist.

Eine Werkstückbearbeitungsvorrichtung der eingangs genannten Art ist in der DE 10 2007 022 057 A1 gezeigt. Das in dieser Schrift als Verschlusselement bezeichnete Auflageelement ist mittels eines Scharniers an einem der Werkstückauflagetische befestigt und kann im Bedarfsfall zur Ausbildung der Auflagefläche in eine horizontale Verschlussposition verschwenkt werden. In einer vertikalen Freigabeposition wird der Zwischenraum freigegeben und ermöglicht dem Bediener den Aufenthalt im Zwischenraum.

Aufgabe der Erfindung ist es, eine Werkstückbearbeitungsvorrichtung der eingangs genannten Art bereitzustellen, bei der die Abstützung der zu bearbeitenden Werkstücke flexibel gestaltet werden kann und eine komfortable Bedienung durch den Bediener ermöglicht wird.

Hierzu schlägt die Erfindung vor, dass das Auflageelement zumindest zwei miteinander gelenkig verbundene Lamellen aufweist, welche zur Ausbildung der Auflagefläche entlang zumindest einer Führung zumindest bereichsweise in den Zwischenraum zwischen den Werkstückauflagetischen einschiebbar und aus diesem herausschiebbar sind.

In anderen Worten ist das erfindungsgemäße Auflageelement aufgrund der zumindest zwei miteinander gelenkig verbundenen Lamellen segmentiert. Das Auflageelement kann vom Bediener entlang einer definierten, durch die Führung bereitgestellten, Bewegungsbahn in den Zwischenraum eingeschoben und im Bedarfsfall aus diesem wieder herausgeschoben bzw. entfernt werden. Dadurch ist es möglich, ein flexibles und einfach zu bewegendes Auflageelement bereitzustellen.

Bevorzugt weist das Auflageelement eine Abfolge einer Vielzahl von miteinander gelenkig verbundenen Lamellen auf. Insbesondere bei einer Vielzahl von miteinander gelenkig verbundenen Lamellen könnte das Auflageelement auch als Rollo bezeichnet werden. Günstigerweise sind die Lamellen zumindest zur Ausbildung der, vorzugsweise horizontalen, Auflagefläche im Zwischenraum horizontal ausgerichtet.

Bevorzugt ist vorgesehen, dass jeweils zwei der Lamellen um eine Gelenkachse gegeneinander verschwenkbar sind, wobei die Gelenkachse orthogonal zu einer Einschieberichtung des Auflageelements im Zwischenraum liegt. Als Einschieberichtung wird im Rahmen dieser Schrift jene Richtung bezeichnet, in der das Auflageelement in den Zwischenraum eingeschoben werden kann. Vorzugsweise ist die Einschieberichtung horizontal ausgerichtet. Günstigerweise ist auch die Gelenkachse horizontal ausgerichtet. Im Fall einer Abfolge einer Vielzahl von miteinander gelenkig verbundenen Lamellen liegen die Gelenkachsen, vorzugsweise alle, parallel zueinander.

Die Begriffe der Lamelle, der gelenkigen Verbindung zwischen den Lamellen und auch der dieser gelenkigen Verbindung zugeordneten Gelenkachse sind in ihrer Bedeutung breit zu verstehen und auszulegen. Bei der Lamelle bzw. den Lamellen handelt es sich vorrangig um den bzw. die lasttragenden Teile des Auflageelements. Allgemein könnte man bei den Lamellen auch von, vorzugsweise längserstreckten, Trägern, Tragteilen oder Tragbalken sprechen, deren Längserstreckung vorzugsweise orthogonal zur Einschieberichtung verläuft. Die gelenkige Verbindung kann scharnierartig mit Achsgelenken, vorzugsweise Einachsgelenken, Gelenkachsbolzen bzw.- stiften oder dergleichen ausgeführt sein. Es ist aber z.B. auch möglich, die gelenkige Verbindung zwischen den Lamellen mittels einer Art Folienscharnier zu realisieren, z.B. indem man die Lamellen mittels eines flexiblen Bandes oder Blechs miteinander verbindet. In diesem Fall übernimmt dann das flexible Band oder Blech die Funktion der gelenkigen Verbindung und damit auch der Gelenkachsen zwischen den Lamellen.

Die erfindungsgemäße Anordnung ermöglicht es, den Zwischenraum mit dem Auflageelement je nach Bedarf in unterschiedlichem Ausmaß zu überbrücken. D.h., dass die Größe der Auflagefläche auf einfache Weise variiert bzw. an den momentanen Bedarf angepasst werden kann, indem das Auflageelement verschieden weit in den Zwischenraum, welcher auch als Nische bezeichnet werden kann, eingeschoben oder aus diesem herausgeschoben wird. Vorzugsweise ist das Auflageelement vollständig aus dem Zwischenraum ausschiebbar.

Bei erfindungsgemäßen Werkstückbearbeitungsvorrichtungen handelt es sich günstigerweise um Sägeanlagen, wie z.B. Plattenaufteilanlagen zum Zersägen von Platten oder Plattenstapeln. Die zu zersägenden Werkstücke sind in diesem Fall also die genannten Platten bzw. Plattenstapel. Das erfindungsgemäße Auflageelement kann aber auch bei anderen Werkstückbearbeitungsvorrichtungen, welche zum Zersägen oder anderweitigen Bearbeiten von Werkstücken vorgesehen sind, eingesetzt werden. Der Begriff des Werkstücks ist entsprechend weit zu fassen. Es kann sich jeweils um ein einzelnes Werkstück handeln. Der Begriff des Werkstücks umfasst aber auch ein mehrteilig aufgebautes Werkstück, wobei vorzugsweise alle Teile des Werkstücks gleichzeitig bearbeitet bzw. zersägt werden, wie dies z.B. bei einem Plattenstapel der Fall ist.

Vorzugsweise sind die Werkstückauflagetische und der Zwischenraum in einem für einen Bediener zugänglichen Bereich, bezogen auf eine Hauptbewegungsrichtung der Werkstückbearbeitungsvorrichtung, hinter einer Bearbeitungseinrichtung, insbesondere Sägeeinrichtung und/oder Sägelinie, der Werkstückbearbeitungsvorrichtung angeordnet. Die Hauptbewegungsrichtung bezieht sich dabei auf den vorrangigen Materialfluss der Werkstücke, insbesondere der Platten oder Plattenstapel, in der Werkstückbearbeitungsvorrichtung. Im Falle einer Sägeeinrichtung liegt die Hauptbewegungsrichtung vorzugsweise orthogonal zur einer Sägelinie, entlang welcher ein, insbesondere rotierendes, Sägeblatt einer Sägeeinrichtung zum Zersägen des Werkstücks verfahrbar ist.

Bevorzugte Ausgestaltungsformen der Erfindung sehen vor, dass das Auflageelement zwischen zwei Führungen geführt ist, wobei eine jeweilige Führung zumindest abschnittsweise am Werkstückauflagetisch angeordnet ist. Die zwei Führungen ermöglichen eine stabile Führung des Auflageelements und gewährleisten eine definierte Lage des Auflageelements in Bezug zu den Werkstückauflagetischen.

Besonders bevorzugt ist vorgesehen, dass die vom Auflageelement gebildete Auflagefläche und Auflageflächen der Werkstückauflagetische in einer, vorzugsweise horizontal ausgerichteten, gemeinsamen Ebene liegen. Dadurch kann beispielsweise die Gefahr des Verkantens des Werkstücks bei der Handhabung auf den Auflageflächen der Werkstückbearbeitungsvorrichtung verhindert werden.

Bei bevorzugten Ausgestaltungsformen der Erfindung kann vorgesehen sein, dass die Werkstückbearbeitungsvorrichtung eine Antriebsvorrichtung zum Verschieben des Auflageelements entlang der Führung und damit vorzugsweise entlang und/oder entgegen der Einschieberichtung aufweist. Die Antriebsvorrichtung ermöglicht eine komfortable Verfahrbarkeit des Auflageelements. Die Bedienung kann z.B. mittels entsprechender Taster oder Schalter erfolgen. Günstig ist es in diesem Zusammenhang, wenn die Antriebsvorrichtung mittels einer Maschinensteuerung der Werkstückbearbeitungsvorrichtung ansteuerbar ist. Dadurch ist es denkbar und möglich, dass die Größe der vom Auflageelement gebildeten Auflagefläche, je nach Dimension des zu bearbeitenden Werkstückes automatisch variiert wird.

Vorteilhafte Ausgestaltungsformen der Erfindung sehen vor, dass zumindest eine der Lamellen eine Verzahnung aufweist, welche mit einem antreibbaren Ritzel der Antriebsvorrichtung zur Verschiebung des Auflageelements zusammenwirkt. Besonders vorteilhaft ist es, wenn mindestens 50% der Lamellen, vorzugsweise alle Lamellen, eine Verzahnung aufweisen, welche mit dem antreibbaren Ritzel der Antriebsvorrichtung zur Verschiebung des Auflageelements zusammenwirken. Dadurch kann eine exakte Positionierung des Auflageelements entlang der Führung in Abhängigkeit vom Verdrehwinkel des Ritzels vorgenommen werden. Alternativ kann auch vorgesehen sein, dass die Antriebsvorrichtung ein Reibrad zum Antreiben des Auflageelements aufweist, welches mit den Lamellen zusammenwirkt. Dabei kann auf die Verzahnung verzichtet werden.

Zusätzlich oder alternativ zur Antriebsvorrichtung kann vorgesehen sein, dass das Auflageelement einen Handgriff zur händischen Bedienung des Auflageelements aufweist. Ist ein Handgriff zusätzlich zur Antriebsvorrichtung vorgesehen, kann ein Freilauf oder eine, vorzugsweise schaltbare, Kupplung an der Antriebsvorrichtung vorgesehen sein, um die händische Bedienung unabhängig von der Antriebsvorrichtung zu ermöglichen.

In bevorzugten Ausgestaltungsformen der Erfindung ist vorgesehen, dass das Auflageelement zumindest bereichsweise unter der Bearbeitungseinrichtung, insbesondere Sägeeinrichtung und/oder Sägelinie, der Werkstückbearbeitungsvorrichtung hindurchgeführt ist. Dadurch kann das Auflageelement zumindest bereichsweise aus dem Zwischenraum und/oder dem für das Bedienpersonal zugänglichen Bereich der Werkstückbearbeitungsvorrichtung herausgeschoben werden. Dies ermöglicht eine verbesserte Zugänglichkeit zur Bearbeitungseinrichtung, insbesondere Sägeeinrichtung bzw. Sägelinie.

In vorteilhaften Ausführungsformen gemäß der Erfindung ist vorgesehen, dass zumindest eine der Lamellen eine Werkstückauflagefläche mit einer Vielzahl von Luftaustrittsöffnungen zur Ausbildung eines Luftkissens zwischen der Werkstückauflagefläche und einem darauf aufliegenden Werkstück aufweist, und die Lamelle mittels zumindest einer Druckluftzuführung mit Druckluft versorgbar ist. Luftkissen sind günstig, um einen oberflächenschonenden Werkstücktransport zu ermöglichen und um schwere Werkstücke mit geringem Kraftaufwand verschieben zu können. Die zur Ausbildung des Luftkissens benötigte Druckluft wird durch eine entsprechende Luftdruckquelle wie z.B. ein Gebläse oder dergleichen bereitgestellt.

Wenn von Druckluft die Rede ist, so kann dies jedes geeignete Gas und jede geeignete Gaszusammensetzung sein, solange sich dies bzw. diese entsprechend unter Druck setzen lässt, um so ein entsprechendes Gaskissen auszubilden. Üblicherweise verwendet man hierzu Umgebungsluft, um mit einer entsprechenden Druckluftquelle die benötigte Druckluft zur Verfügung zu stellen. Grundsätzlich ist es auch denkbar, andere Gas oder Gasgemische zur Ausbildung von Luftkissen zu verwenden. Auch dies ist in diesem Sinne hier von dem Begriff der Druckluft mit umfasst.

Eine bevorzugte Ausgestaltungsform sieht vor, dass zumindest eine der Führungen die zumindest eine, vorzugsweise mehrere, Druckluftzuführung(en) aufweist bzw. aufweisen und zumindest eine der, vorzugsweise alle, Lamellen einen mit der Druckluftzuführung korrespondierenden Drucklufteinlass zur Übernahme der Druckluft aufweist oder aufweisen. In anderen Worten ist bei diesen Ausgestaltungsformen günstigerweise vorgesehen, dass die Lamellen an zumindest eine im Bereich des Zwischenraums und/oder in der Führung angeordnete Druckluftzuführung andocken können.

In einer besonders bevorzugten Ausgestaltungsform kann dabei vorgesehen sein, dass jede der Lamellen zumindest einen, vorzugsweise seitlich angeordneten, Drucklufteinlass aufweist und zumindest eine der Führungen eine Vielzahl von in einem konstanten Abstand voneinander beabstandeten, entlang eines, vorzugsweise linear erstreckten, Abschnitts der Führung angeordneten, selbstschließenden Druckluftzuführungen aufweist, wobei der Abstand der Druckluftzuführungen dem Abstand der Drucklufteinlässe der Lamellen entspricht. Die Anordnung der Druckluftzuführungen in einem konstanten Abstand voneinander könnte auch als Rasterung bezeichnet werden. Die Druckluftzuführungen sind dabei günstigerweise im Bereich des Zwischenraums an der Führung angeordnet.

Je nach gewünschter oder gegebenenfalls von der Maschinensteuerung automatisch bestimmter Größe der Auflagefläche ist das Auflageelement jeweils so weit entlang der Führung zu verschieben, dass ein jeweiliger Drucklufteinlass der Lamellen mit der Druckluftzuführung fluchtet. Mögliche Betriebsstellungen des Auflageelements sind - falls die Ausbildung eines Luftkissens gewünscht ist - bei diesen Varianten von der Rasterung der Druckluftzuführungen abhängig bzw. vorgegeben. D.h. die Auflagefläche ist zur Ausbildung eines Luftkissens in Stufen veränderbar.

Günstigerweise ist eine jeweilige Druckluftzuführung als Kugel-Ventildüse ausgeführt, welche bei der Überdeckung der Druckluftzuführung mit dem Drucklufteinlass der Lamelle automatisch öffnet. Derartige Kugel-Ventildüsen hinlänglich bekannt.

Die Druckluftzufuhr zur jeweiligen Lamelle kann von einer Seite, d.h. von an einer Führung angeordneten Druckluftzuführungen, oder von beiden Seiten erfolgen, wobei dann an beiden Führungen Druckluftzuführungen vorgesehen sind.

In einer alternativen Ausgestaltungsform ist es denkbar und möglich, dass die Druckluftzuführung einen Druckluftkanal mit zwei parallel zueinander angeordneten flexiblen Dichtungen umfasst, welche den Druckluftkanal in Längsrichtung abdichten, wobei der Drucklufteinlass zur Entnahme von Druckluft in den Druckluftkanal eingreift und die Dichtungen einen den Drucklufteinlass aufweisenden Entnahmestutzen dichtend umfassen.

Die Druckluftzuführungen können in diesen Ausführungsbespielen von Druckluftreservoiren in den Werkstückauflagetischen gespeist werden. Diese Druckluftreservoire in den Werkstückauflagetischen können ohne Probleme relativ groß ausgeführt sein, was für eine gleichmäßige Druckversorgung günstig ist.

In weiteren alternativen Ausgestaltungsformen gemäß der Erfindung kann vorgesehen sein, dass die Druckluftzuführung eine Druckluftversorgungsleitung des Auflageelements ist, welche mit dem Auflageelement verschiebbar ist und die zumindest eine Lamelle mit Druckluft versorgt. Besonders günstig ist es in diesem Zusammenhang, wenn die Druckluftversorgungsleitung parallel zur Führung durch die Lamellen hindurchgeführt ist, wobei die Druckluftversorgungsleitung im Bereich einer jeweiligen Lamelle zumindest eine Druckluftübergabeöffnung zur Versorgung einer jeweiligen Lamelle mit Druckluft aufweist. Mit einer derartigen Ausgestaltungsform ist es möglich, jede beliebige Position Auflageelements in Bezug zu den Werkstückauflagetischen, unabhängig von einem Raster, einzunehmen. Die Drucklustversorgungsleitung kann z.B. als ein mit entsprechenden Druckluftübergabeöffnungen versehener Schlauch ausgeführt sein.

Weitere Merkmale und Einzelheiten bevorzugter Ausgestaltungsformen der vorliegenden Erfindung ergeben sich aus der nachfolgenden Figurenbeschreibung. Es zeigen:
Fig. 1 eine schematische Draufsicht auf den für die Erfindung wesentlichen Teil eines erfindungsgemäßen Ausführungsbeispiels einer Werkstückbearbeitungsvorrichtung in Form einer Plattenaufteilanlage;
Fig. 2 den Längsschnitt entlang der Schnittlinie A-A aus Fig. 1;
Fig. 3 das Auflageelement gemäß Fig. 2 im Detail;
Fig. 4 den Längsschnitt entlang der Schnittlinie B-B aus Fig. 1
Fig. 5 das Auflageelement gemäß Fig. 4 im Detail;
Fig. 6 das Detail Z gemäß Fig. 2;
Fig. 7 das Detail C gemäß Fig. 3;
Fig. 8 den Schnitt D-D gemäß Fig. 6;
Fig. 9 eine Stirnansicht auf eine Lamelle mit seitlicher Druckluftzuführung;
Fig. 10 den Schnitt E-E gemäß Fig. 9 inklusive der die Lamelle tragenden Führungen;
Fig. 11 das Detail F gemäß Fig. 10;
Fig. 12 eine zu Fig. 6 analoge Darstellung einer alternativen Druckluftzuführung
Fig. 13 den Horizontalschnitt G-G gemäß Fig. 12 ;
Fig. 14 das Detail H gemäß Fig. 13 und
Fig. 15 eine Skizze zu einer alternativen Ausgestaltungsform eines erfindungsgemäß einsetzbaren Auflageelements

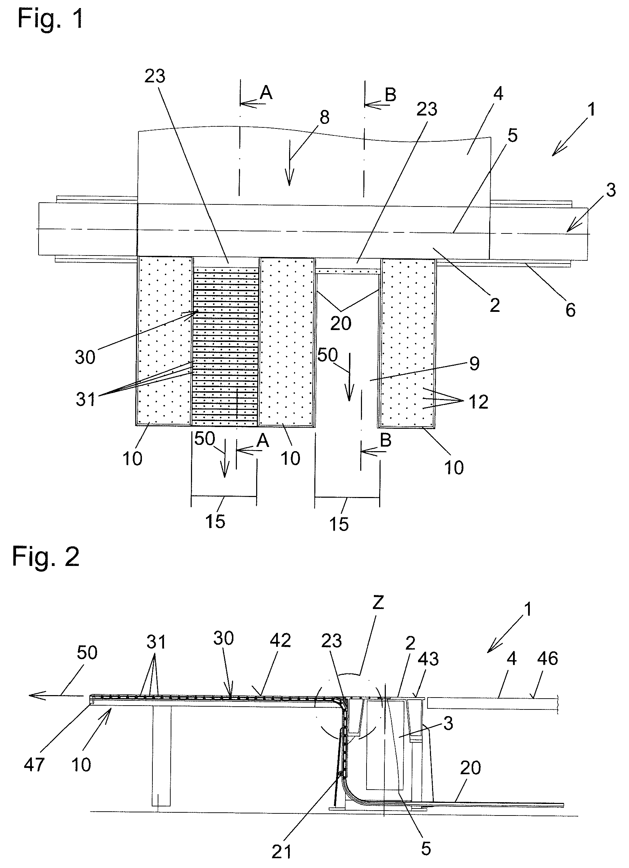

In der schematisierten Draufsicht gemäß Fig. 1 ist der erfindungswesentliche Bereich einer erfindungsgemäßen Werkstückbearbeitungsvorrichtung 1 in Form einer Plattenaufteilanlage dargestellt. Die Bearbeitungseinrichtung 3 ist als Sägeeinrichtung ausgeführt. Die Sägeeinrichtung gemäß dem Ausführungsbeispiel ist unterhalb der Maschinentischauflagefläche 43 des Maschinentischs 2 angeordnet. Eine derartige Anordnung wird auch als Untertischsäge bezeichnet und ist im Bereich der Plattenaufteilanlagen hinlänglich bekannt.

Die Sägeeinrichtung weist einen verfahrbaren Sägewagen mit einem durch einen Motor angetriebenen Sägeblatt, beispielsweise eine Kreissäge, auf. Der Sägeschnitt zum Zersägen des Werkstücks, insbesondere der Platten oder Plattenstapel, erfolgt mittels des entlang der Sägelinie 5 verfahrbaren Sägeblatts. Das Sägeblatt ist für den Sägevorgang über die Maschinentischauflagefläche 43 des Maschinentisches 2 hochfahrbar und und darunter absenkbar. Aus Gründen der Übersichtlichkeit wurde in den Figuren auf die Darstellung der einzelnen Komponenten der Sägeeinrichtung verzichtet. Die Sägeeinrichtung könnte grundsätzlich auch oberhalb des Maschinentischs 2 angeordnet sein. Auch derartige Anordnungen sind hinlänglich bekannt.

Auf dem Zuführtisch 4 sind die zu zersägenden Werkstücke ablegbar. Der Zuführtisch könnte z.B. eine Vielzahl von Rollen oder Druckluftöffnungen zur Ausbildung von Luftkissen aufweisen, um das Werkstück darauf zu bewegen. Die Werkstückbearbeitungsvorrichtung 1 könnte über zumindest einen Greifer und/oder Vorschubeinrichtungen verfügen, welche eine Bewegung des Werkstücks in Hauptbewegungsrichtung 8 oder entgegengesetzt zur Hauptbewegungsrichtung 8 ermöglichen. Vorzugsweise ist die Hauptbewegungsrichtung 8 orthogonal zur Sägelinie 5 ausgerichtet. All dies ist an sich bekannt und muss nicht weiter erläutert werden.

Die Werkstückbearbeitungsvorrichtung 1 weist im Ausführungsbeispiel drei Werkstückauflagetische 10 auf. Diese sind in einem für Bedienpersonal zugänglichen Bereich und, bezogen auf die, insbesondere horizontal ausgerichtete, Hauptbewegungsrichtung 8, hinter der Bearbeitungseinrichtung 3 angeordnet. Die Werkstückauflagetische 10 sind, z.B. mittels Schrauben, an einer Befestigungsschiene 6 am Maschinentisch 2 der Werkstückbearbeitungsvorrichtung 1 befestigt. Die Werkstückauflagetische 10 könnten aber auch freistehend sein.

Die Werkstückauflagetische 10 sind mit einem Abstand 15 voneinander beabstandet. Dieser Abstand 15 ist günstigerweise so gewählt, dass das Bedienpersonal in den dadurch gebildeten Zwischenraum 9 zwischen den Werkstückauflagetischen 10 hineingehen kann. Der Abstand 15 beträgt günstigerweise zumindest 600 mm, besonders bevorzugt zumindest 800mm. Das Bedienpersonal kann von dem auch als Nische bezeichenbaren Zwischenraum 9 aus beispielsweise Inspektionen, Wartungen oder Einstellarbeiten etc. an der Sägeeinrichtung vornehmen oder Werkstücke oder Werkstückteile hinter der Sägelinie 5 entgegennehmen oder von dort entgegen der Hauptbewegungsrichtung 8 einschieben.

Die erfindungsgemäße Werkstückbearbeitungsvorrichtung 1 weist im Ausführungsbeispiel zwei Auflageelemente 30 mit mehreren miteinander gelenkig verbundenen Lamellen 31 auf. In Fig. 1 ist ein Zustand dargestellt, bei welchem eines der Auflageelemente 30, nämlich das linke, den Zwischenraum 9 vollständig überspannt. Dieses Auflageelement 30 ist hierzu in den Zwischenraum 9 zwischen den Werkstückauflagetischen 10 eingeschoben und bildet eine Auflagefläche 42 zur Auflage von Werkstücken, z. B. Platten oder Plattenstapeln. Das zweite Auflageelement 30, nämlich das rechte, ist nahezu vollständig aus dem entsprechenden Zwischenraum 9 herausgeschoben und ermöglicht den Zutritt zur Bearbeitungseinrichtung 3. Die einzelnen Werkstückauflageflächen 45 der einzelnen Lamellen 31 bilden in Ihrer Gesamtheit im Zwischenraum 9 die Auflagefläche 42 zur Auflage von Werkstücken.

Das erfindungsgemäße Auflageelement 30 kann flexibel verwendet werden. Je nach Bedarf kann das Auflageelement 30 auch nur bereichsweise in den Zwischenraum 9 eingeschoben oder aus diesem herausgeschoben werden.

Jeweils zwei der Lamellen 31 des Auflageelements 30 sind um eine Gelenkachse 35 gegeneinander verschwenkbar. Die Gelenkachsen 35 sind zueinander parallel angeordnet und bezogen auf die Einschieberichtung 50 des Auflageelements 30 orthogonal ausgerichtet. Das Auflageelement 30 könnte auch als eine Art Rollo bezeichnet werden. Dabei ist zu beachten, dass das erfindungsgemäße Auflageelement 30 und auch die Lamellen 31 zumindest im Bereich des Zwischenraums 9 vorzugsweise horizontal ausgerichtet ist.

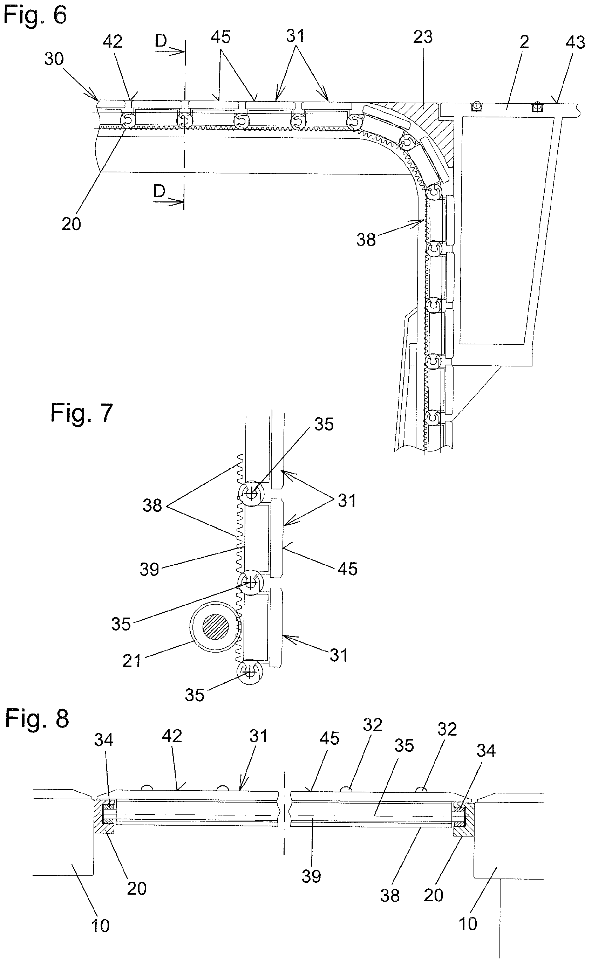

Das Auflageelement 30 ist entlang zweier Führungen 20 verfahrbar. Im Ausführungsbeispiel weisen die Lamellen 31 des Auflageelements drehbar gelagerte Rollen 34 zur Führung in einer Nut 24 der Führung 20 auf, vgl. Fig. 8. Anstatt der Rollen 34 ist es auch denkbar und möglich, Gleitkufen etc. an der jeweiligen Lamelle vorzusehen, welche in gleitendem Kontakt mit der Führung stehen. Im Ausführungsbeispiel ist ein Abschnitt der jeweiligen Führung 20 abschnittsweise am Werkstückauflagetisch 10 angeordnet.

Eine jeweilige Führung 20 ist im Ausführungsbeispiel, bezogen auf eine Ansicht orthogonal zur Ausziehrichtung 30, stufenförmig ausgebildet, vgl. Fig. 2. Dadurch kann das Auflageelement 30 zumindest bereichsweise unterhalb der Bearbeitungseinrichtung 3, d. h. der Sägeeinrichtung, der Werkstückbearbeitungsvorrichtung 1 hindurchgeführt werden.

Der Bediener kann das Auflageelement 30 günstigerweise vollständig aus dem Zwischenraum 9 herausschieben, ohne dass die aus dem Zwischenraum 9 herausgeschobenen Lamellen 31 die Zugänglichkeit zur Bearbeitungsvorrichtung 3 im Zwischenraum 9 beeinträchtigen.

Die jeweiligen Lamellen 31 werden beim Herausschieben des Auflageelements 30 aus dem Zwischenraum 9 aus einer horizontalen Orientierung in eine vertikale Orientierung umgelenkt, vgl. insbesondere Fig. 6. Im Bereich der Umlenkung ist im Ausführungsbeispiel eine Abdeckleiste 23 angeordnet, um den Bereich der Umlenkung von oben her abzudecken. Die Abdeckleiste 23 erleichtert damit den Übergang von Werkstücken zwischen der Maschinentischauflagefläche 43 und der von den Lamellen 31 des Auflageelements 30 gebildeten Auflagefläche 42. Die Umlenkung erfolgt in Fig. 6 über den gebogenen Abschnitt der Führung (20) in Summe um 90°.

Im Ausführungsbeispiel ist vorgesehen, dass die Auflageflächen 44 der Werkstückauflagetische 10 und die Auflagefläche 42, welche vom Auflageelement 30 gebildet ist, in einer gemeinsamen Ebene liegen. Diese Ebene ist vorzugsweise horizontal ausgerichtet, wie dies auch im Ausführungsbeispiel der Fall ist. Auch die Maschinentischauflagefläche 43 und die Zuführtischauflagefläche 46 des Zuführtischs 4 liegen mit der Auflagefläche 42 in einer gemeinsamen Ebene.

In den Ausführungsbeispielen weist die Werkstückbearbeitungsvorrichtung 1 eine nicht näher dargestellte Antriebsvorrichtung zum Verschieben des Auflageelements 30 entlang der Führung 20 auf. Das antreibbare Ritzel 21 der Antriebsvorrichtung wirkt im Ausführungsbeispiel mit einer Verzahnung 38 der Lamellen 31 zur Verschiebung des Auflageelements 30 zusammen, vgl. Fig. 7. Das Ritzel 21 ist mittels eines Elektromotors der Antriebsvorrichtung antreibbar. Auch andere Antriebe anstatt des Elektromotors sind grundsätzlich möglich.

Im Ausführungsbeispiel ist vorgesehen, dass die Maschinensteuerung der Werkstückbearbeitungsvorrichtung 1 die Antriebsvorrichtung ansteuert. Dadurch ist eine automatische Anpassung der Größe der vom Auflageelement 30 ausgebildeten Auflagefläche 42 möglich. Die Verknüpfung mit der Maschinensteuerung könnte aber auch entfallen.

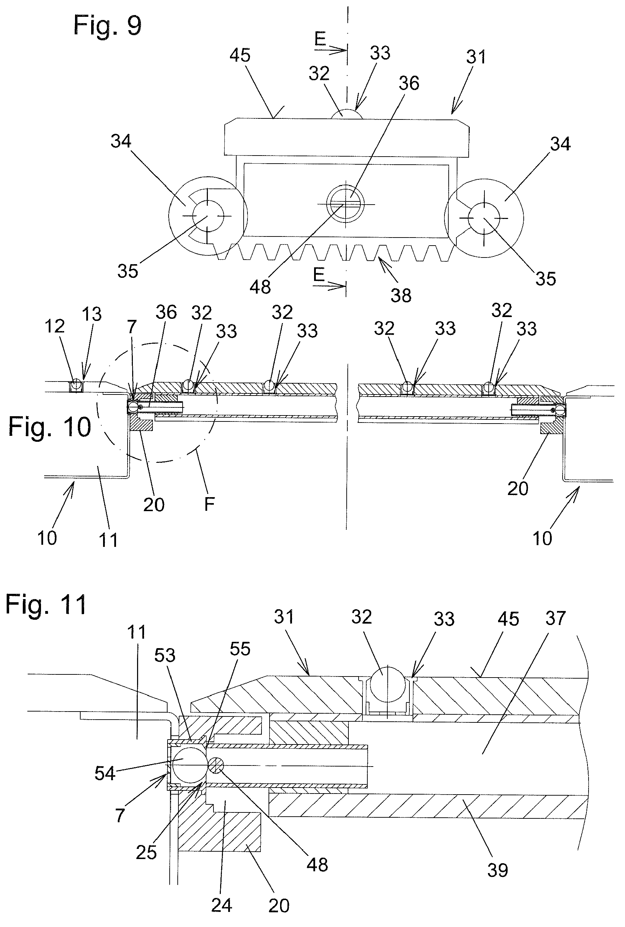

Im Ausführungsbeispiel weist eine jeweilige Lamelle 31 einen Strangpresskörper 39, z.B. aus Aluminium, auf. Die Verzahnung 38 ist im Ausführungsbeispiel in den Strangpresskörper 39 integriert. Die Verzahnung könnte aber auch durch eine separate, an der Lamelle 31 angeordnete Zahnstange realisiert werden. Die Verzahnung 38 ist im Ausführungseispielgegenüberliegend zur Werkstückauflagefläche 45 der Lamelle 31 angeordnet, vgl. Fig. 9.

Zusätzlich zur Antriebsvorrichtung ist im Ausführungsbeispiel auch ein Handgriff 47 zur händischen Verschiebung des Auflageelements 30 entlang der Führungen 20 vorgesehen. Auf den Handgriff 47 könnte in anderen Ausführungsbeispielen auch verzichtet werden. Die Antriebsvorrichtung bzw. das Ritzel 21 kann mit einem Freilauf ausgestattet sein, um eine händische Bewegung in Überlagerung zur Antriebsvorrichtung zu ermöglichen.

Im Ausführungsbeispiel weisen die Werkstückauflagetische 10 Luftaustrittsöffnungen 12 zur Ausbildung eines Luftkissens zwischen der Auflagefläche 44 des jeweiligen Werkstückauflagetisches 10 und einem darauf aufliegenden Werkstück auf. Dadurch kann ein oberflächenschonender Werkstücktransport und auch die kraftsparende Handhabung von schweren Werkstücken durch das Bedienpersonal ermöglicht werden. Die jeweilige Luftaustrittsöffnung 12 ist im Ausführungsbeispiel an einer Ventildüse einer an sich bekannten Kugel-Ventildüse 13 ausgebildet.

Auch die Werkstückauflagefläche 45 der jeweiligen Lamelle 31 weist im Ausführungsbeispiel eine Vielzahl von Luftaustrittsöffnungen 32 zur Ausbildung eines Luftkissens zwischen der Werkstückauflagefläche 45 und einem darauf aufliegenden Werkstück auf. Die jeweilige Luftaustrittsöffnung 32 ist an einer Ventildüse einer entsprechenden Kugel-Ventildüse 33 ausgebildet.

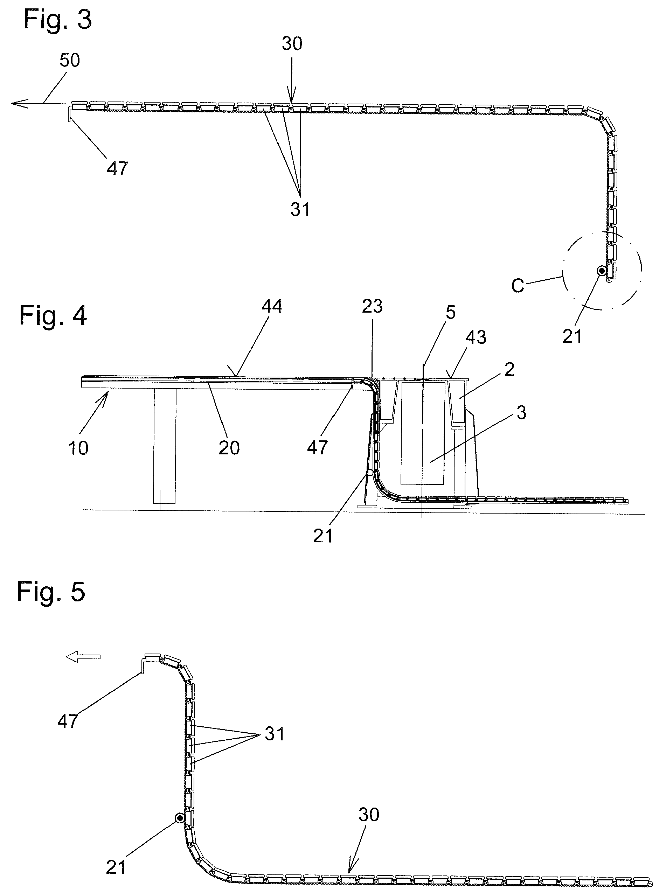

In den Figuren 1 bis 8 ist die Zuführung von Druckluft aus Gründen der Übersichtlichkeit nicht im Detail dargestellt. Diese kann auf unterschiedliche Art und Weise realisiert werden. Zwei mögliche Ausführungsvarianten sind jeweils in den Figuren 9 bis 11 bzw. 12 bis 14 dargestellt und werden im Folgenden näher erläutert. Beide Ausführungsvarianten können bei der in den Fig. 1 bis 8 dargestellten Werkstückbearbeitungsvorrichtung 1 eingesetzt werden.

In einer ersten Ausführungsvariante sind in den beiden Führungen 20 abschnittsweise, d.h. im Bereich des Zwischenraums 9, mehrere Druckluftzuführungen 7 angeordnet sind. Die Druckluftzuführungen 7 werden von einem Druckluftreservoir 11 des Werkstückauflagetisches 10 mit Druckluft versorgt, vgl. Fig. 10 und 11. Die Druckluftaustrittsöffnung 7 könnte in anderen Ausführungsbeispielen auch neben der Führung 20, z. B. unterhalb der Führung 20 angeordnet sein.

Im Ausführungsbeispiel weisen die Druckluftzuführungen 7 Kugel-Ventildüsen 25 auf. Die gegenüber dem Umgebungsdruck einen höheren Druck aufweisende Druckluft drückt die Kugel in Richtung zur Austrittsöffnung der Ventildüse, wodurch diese selbsttätig die Druckluftzuführung 7 verschließt.

Die Lamellen 31 weisen einen Druckluftverteiler 37 bzw. Druckluftverteilerraum auf, welcher die Kugel-Ventildüsen 33 miteinander kommunizierend verbindet. Über einen seitlichen Drucklufteinlass 36 kann die Druckluft in den Druckluftverteiler 37 zugeführt werden.

Zur Versorgung der Lamelle 31 wird ein jeweiliger Drucklufteinlass 36 mit einer jeweiligen Druckluftzuführung 7 in Überdeckung gebracht. Ein an der Lamelle 31 angeordnetes Betätigungselement 48, z. B. in Form des im Querschnitt dargestellten Bolzens im Bereich des Drucklufteinlasses 36, hebt die Kugel 54 der Kugel-Ventildüse 25 vom Ventilsitz 55 der Ventildüse 53 ab, wodurch die Austrittsöffnung der Kugel-Ventildüse 25 freigegeben wird.

Die Druckluftzuführungen 7 sind in einem konstanten Abstand zueinander im Bereich des Zwischenraums 9 entlang der Führung 20 verteilt. Der Abstand zwischen den Druckluftzuführungen 7 entspricht dabei dem Abstand der Drucklufteinlässe 36 der Lamellen 31 im Zwischenraum 9 zueinander. Die regelmäßige Verteilung der Druckluftzuführungen 7 in der Führung 20 könnte in diesem Zusammenhang auch als Rasterung bezeichnet werden. Das Rastermaß, d.h. der Abstand der Rasterung der Druckluftzuführungen 7 entspricht dann dem Rastermaß der Drucklufteinlässe 36 der Lamellen 31 bei einer linearen Ausrichtung der Lamellen 31 des Auflageelements 30.

Mit den selbstschließenden Druckluftzuführungen 7 werden jene Lamellen 31 mit Druckluft versorgt, welche eine Position im Zwischenraum 9 zwischen den Werkstückauflagetischen 10 einnehmen.

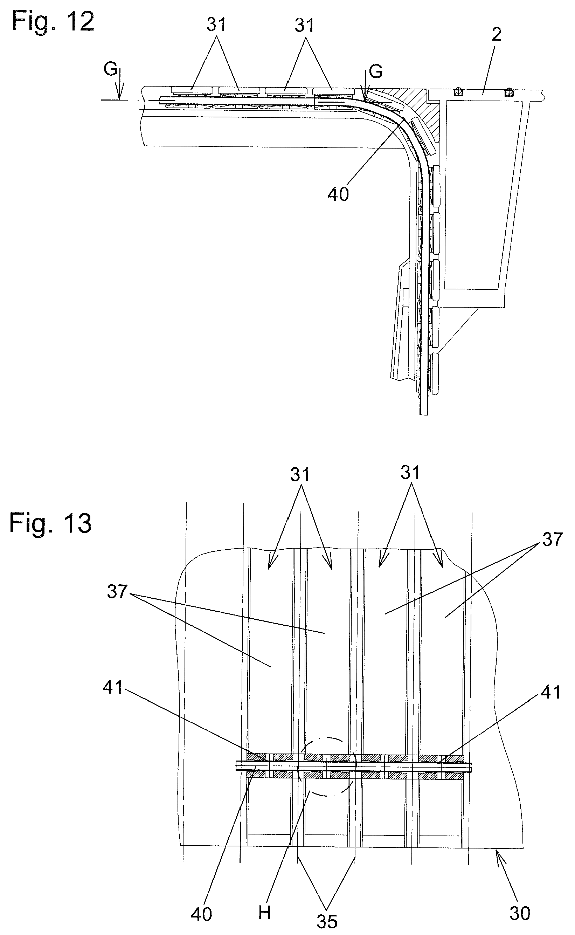

In der in den Fig. 12 bis 14 dargestellten zweiten Ausführungsvariante für eine Zuführung von Druckluft zu den Lamellen 31, ist vorgesehen, dass die Druckluftzuführung 7 eine Druckluftversorgungsleitung 40, vorzugsweise in Form eines flexiblen Schlauchs, aufweist. Diese ist mit dem Auflageelement 30 verschiebbar und versorgt die Lamellen 31 mit Druckluft.

Die Druckluftversorgungsleitung 40 ist in eine Richtung quer zu den Gelenkachsen 35 durch die Lamellen 31 hindurchgeführt. Insbesondere ist die Druckluftversorgungsleitung 40 parallel zu den Führungen 20 der Lamellen 31 durch die Lamellen 31 hindurchgeführt.

Die Druckluftversorgungsleitung 40 weist im Bereich einer jeweiligen Lamelle 31 im Ausführungsbeispiel eine Vielzahl von Druckluftübergabeöffnungen 41 zur Versorgung einer jeweiligen Lamelle 31 mit Druckluft auf. Je nach Anforderungen könnte auch eine Druckluftübergabeöffnung 41 ausreichen. Die Druckluft mündet über die Druckluftübergabeöffnungen 41 in den Druckluftverteiler 37 der Lamellen 31.

Dabei ist, bezogen auf die Längserstreckung der Druckluftversorgungsleitung 40, vor und nach den Druckübergabeöffnungen 41 eine Dichtung 49 vorgesehen. Diese kann z. B. als O-Ring ausgeführt sein. Die Dichtung 49 verhindert die Leckage von Druckluft im Auflageelement 30.

Um Knicke in der Druckluftversorgungsleitung 40 bei der Umlenkung des Auflageelements 30 zu verhindern, ist vorgesehen, dass eine jeweilige Lamelle 31 zwei einander gegenüberliegende konische Durchführabschnitte 52 für die Druckluftversorgungsleitung 40 aufweisen, welche ein Anschmiegen der Druckluftversorgungsleitung 40 im Bereich der Umlenkung ermöglichen, vgl. Fig. 12 bis 14.

Die Druckluftversorgungsleitung 40 ist in an sich bekannter Weise mit einem nicht näher dargestellten Druckluftreservoir oder einem Drucklufterzeuger verbunden.

Es sind eine Reihe von Alternativen zur Zuführung von Druckluft an die Lamellen 31 denkbar. Die Druckluftversorgungsleitung 40 könnte beispielsweise unterhalb der Lamellen 31 an den Lamellen 31 angeordnet sein. In diesem Zusammenhang könnten T-Abzweigungen an den Lamellen vorgesehen sein, welche eine Zuführung von Druckluft zur Lamelle 31 und zur Weitergabe von Druckluft an die jeweils benachbarte Lamelle 31 ermöglichen.

Auf die Luftaustrittsöffnungen 32 in der Werkstückauflagefläche könnte in einfacheren erfindungsgemäßen Ausführungen auch verzichtet werden. Damit entfällt auch die Druckluftzuführung zu den Lamellen 31.

Grundsätzlich ist es auch denkbar und möglich, dass das Auflageelement 30 beim Herausschieben aus dem Zwischenraum 9, z.B. auf einer rotierenden Welle aufgewickelt wird. Derartige Anordnungen sind z.B. aus dem Bereich von Rolltoren allgemein bekannt. Alternativ ist es auch denkbar und möglich, die Lamellen 31 zu stapeln, wie dies ebenfalls aus dem Bereich von Garagentoren hinlänglich bekannt ist.

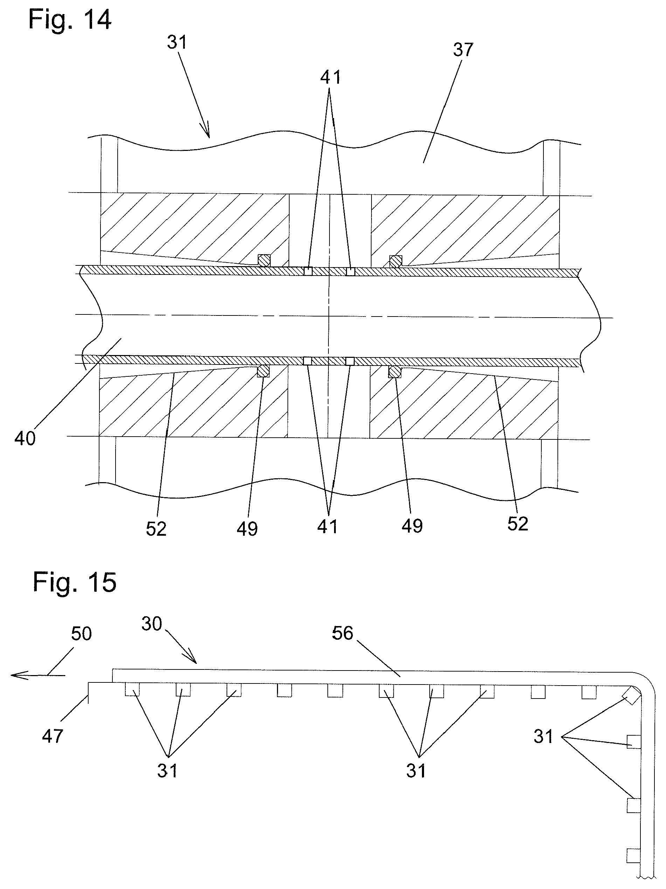

In Fig. 15 ist nun noch eine Variante eines erfindungsgemäß einsetzbaren Auflageelements 30 gezeigt, bei der die gelenkige Verbindung der Lamellen 31 mittels eines flexiblen Bandes 56 realisiert ist. Die Bereiche des flexiblen Bandes 56 zwischen den Lamellen 31 bilden hier sozusagen die Gelenkachsen 35. Hierzu sind die Lamellen 31 in fixen Abständen zueinander, in Einschieberichtung 50 gesehen, hintereinander am flexiblen Band 56 angebracht. Anstelle des flexiblen Bandes 56 kann auch ein flexibles Blech oder dergleichen zur gelenkigen Verbindung der Lamellen 31 eingesetzt werden.

Auch bei diesen Ausführungsbeispielen können Luftpolster auf dem Auflageelement 30 aufgebaut werden. Z.B. können hier nicht dargestellte Druckluftversorgungsleitungen 40 z.B. in Schlauchform in das flexible Band 56 integriert sein und über entsprechende Luftaustrittsöffnungen 32 Druckluft auf die von den Lamellen 31 abgewandte Seite des flexiblen Bandes 56 abgeben, um so ein Luftkissen auf dem flexiblen Band 56 aufzubauen. Genauso gut kann auch eine Druckluftzuführung, wie sie in Fig. 11 gezeigt ist, direkt in die Lamellen 31 hinein erfolgen. In diesem Fall sollten dann in Fig. 15 nicht dargestellte Druckluftaustrittsöffnungen im flexiblen Band 56 vorhanden und mit den Lamellen 31 entsprechend kommunizierend ausgebildet sein.

**Legende**

| zu den Hinweisziffern: | |
|---|---|
| 1 Werkstückbearbeitungsvorrichtung | 38 Verzahnung |
| 2 Maschinentisch | 39 Strangpresskörper |
| 3 Bearbeitungseinrichtung | 40 Druckluftversorgungsleitung |
| 4 Zuführtisch | 41 Druckluftübergabeöffnung |
| 5 Sägelinie | 42 Auflagefläche |
| 6 Befestigungsschiene | 43 Maschinentischauflagefläche |
| 7 Druckluftzuführung | 44 Auflagefläche |
| 8 Hauptbewegungsrichtung | 45 Werkstückauflagefläche |
| 9 Zwischenraum | 46 Zuführtischauflagefläche |
| 10 Werkstückauflagetisch | 47 Handgriff |
| 11 Druckluftreservoir | 48 Betätigungselement |
| 12 Luftaustrittsöffnung | 49 Dichtung |
| 13 Kugel-Ventildüse | 50 Einschieberichtung |
| 15 Abstand | 52 Durchführabschnitt |
| 20 Führung | 53 Ventildüse |
| 21 Ritzel | 54 Kugel |
| 22 Umlenkung | 55 Ventilsitz |
| 23 Abdeckleiste | 56 flexibles Band |
| 24 Nut | |
| 25 Kugel-Ventildüse | |
| 30 Auflageelement | |
| 31 Lamelle | |
| 32 Luftaustrittsöffnung | |
| 33 Kugel-Ventildüse | |
| 34 Rolle | |
| 35 Gelenkachse | |
| 36 Drucklufteinlass | |
| 37 Druckluftverteiler | |

## Patentansprüche

1. Werkstückbearbeitungsvorrichtung (1), insbesondere Plattenaufteilanlage zum Zersägen von Platten oder Plattenstapeln, mit zumindest zwei voneinander beabstandeten Werkstückauflagetischen (10) und zumindest einem Auflageelement (30), welches in zumindest einer Betriebsstellung zur Ausbildung einer einen Zwischenraum (9) zwischen den Werkstückauflagetischen (10) zumindest bereichsweise überbrückenden Auflagefläche (42) zwischen den Werkstückauflagetischen (10) angeordnet ist, **dadurch gekennzeichnet, dass** das Auflageelement (30) zumindest zwei miteinander gelenkig verbundene Lamellen (31) aufweist, welche zur Ausbildung der Auflagefläche (42) entlang zumindest einer Führung (20) zumindest bereichsweise in den Zwischenraum (9) zwischen den Werkstückauflagetischen (10) einschiebbar und aus diesem herausschiebbar sind.

2. Werkstückbearbeitungsvorrichtung (1) nach Anspruch 1, **dadurch gekennzeichnet, dass** das Auflageelement (30) zwischen zwei Führungen (20) geführt ist, wobei eine jeweilige Führung (20) zumindest abschnittsweise am Werkstückauflagetisch (10) angeordnet ist.

3. Werkstückbearbeitungsvorrichtung (1) nach Anspruch 1 oder 2, **dadurch gekennzeichnet, dass** jeweils zwei der Lamellen (31) um eine Gelenkachse (35) gegeneinander verschwenkbar sind, wobei die Gelenkachse (35) orthogonal zu einer Einschieberichtung (50) des Auflageelements (30) im Zwischenraum (9) liegt.

4. Werkstückbearbeitungsvorrichtung (1) nach einem der Ansprüche 1 bis 3, **dadurch gekennzeichnet, dass** die vom Auflageelement (30) gebildete Auflagefläche (42) und Auflageflächen (44) der Werkstückauflagetische (10) in einer gemeinsamen Ebene liegen.

5. Werkstückbearbeitungsvorrichtung (1) nach einem der Ansprüche 1 bis 4, **dadurch gekennzeichnet, dass** die Werkstückbearbeitungsvorrichtung (1) eine Antriebsvorrichtung zum Verschieben des Auflageelements (30) entlang der Führung (20) aufweist.

6. Werkstückbearbeitungsvorrichtung (1) nach Anspruch 5, **dadurch gekennzeichnet, dass** die Antriebsvorrichtung mittels einer Maschinensteuerung der Werkstückbearbeitungsvorrichtung (1) ansteuerbar ist.

7. Werkstückbearbeitungsvorrichtung (1) nach Anspruch 5 oder 6, **dadurch gekennzeichnet, dass** zumindest eine der Lamellen (31) eine Verzahnung (38) aufweist, welche mit einem antreibbaren Ritzel (21) der Antriebsvorrichtung zur Verschiebung des Auflageelements (30) zusammenwirkt.

8. Werkstückbearbeitungsvorrichtung (1) nach einem der Ansprüche 1 bis 7, **dadurch gekennzeichnet, dass** die Werkstückauflagetische (10) und der Zwischenraum (9) in einem für Bedienpersonal zugänglichen Bereich, bezogen auf eine Hauptbewegungsrichtung (8) der Werkstückbearbeitungsvorrichtung (1), hinter einer Bearbeitungseinrichtung (3), insbesondere Sägeeinrichtung oder Sägelinie (5), der Werkstückbearbeitungsvorrichtung (1) angeordnet sind.

9. Werkstückbearbeitungsvorrichtung (1) nach einem der Ansprüche 1 bis 8, **dadurch gekennzeichnet, dass** das Auflageelement (30) zumindest bereichsweise unter einer oder der Bearbeitungseinrichtung (3), insbesondere Sägeeinrichtung oder Sägelinie (5), der Werkstückbearbeitungsvorrichtung (1) hindurchgeführt ist.

10. Werkstückbearbeitungsvorrichtung (1) nach einem der Ansprüche 1 bis 9, **dadurch gekennzeichnet, dass** zumindest eine der Lamellen (31) eine Werkstückauflagefläche (45) mit einer Vielzahl von Luftaustrittsöffnungen (32) zur Ausbildung eines Luftkissens zwischen der Werkstückauflagefläche (45) und einem darauf aufliegenden Werkstück aufweist, und die Lamelle (31) mittels zumindest einer Druckluftzuführung (7) mit Druckluft versorgbar ist.

11. Werkstückbearbeitungsvorrichtung (1) nach Anspruch 10, **dadurch gekennzeichnet, dass** zumindest eine der Führungen (20) die zumindest eine, vorzugsweise mehrere, Druckluftzuführung(en) (7) aufweist oder aufweisen und zumindest eine der, vorzugsweise alle, Lamellen (31) einen mit der Druckluftzuführung (7) korrespondierenden Drucklufteinlass (36) zur Übernahme der Druckluft aufweist oder aufweisen.

12. Werkstückbearbeitungsvorrichtung (1) nach Anspruch 11, **dadurch gekennzeichnet, dass** jede der Lamellen (31) zumindest einen, vorzugsweise seitlich angeordneten, Drucklufteinlass (36) aufweist und zumindest eine der Führungen (20) eine Vielzahl von in einem konstanten Abstand voneinander beabstandeten, entlang eines, vorzugsweise linear erstreckten, Abschnitts der Führung (20) angeordneten, selbstschließenden Druckluftzuführungen (7) aufweist, wobei der Abstand der Druckluftzuführungen (7) dem Abstand der Drucklufteinlässe (36) der Lamellen (31) entspricht.

13. Werkstückbearbeitungsvorrichtung (1) nach Anspruch 10, **dadurch gekennzeichnet, dass** die Druckluftzuführung (7) eine Druckluftversorgungsleitung des Auflageelements (30) ist, welche mit dem Auflageelement (30) verschiebbar ist und die zumindest eine Lamelle (31) mit Druckluft versorgt.

14. Werkstückbearbeitungsvorrichtung (1) nach Anspruch 13, **dadurch gekennzeichnet, dass** die Druckluftversorgungsleitung (40) parallel zur Führung durch die Lamellen (31) hindurchgeführt ist, wobei die Druckluftversorgungsleitung (40) im Bereich einer jeweiligen Lamelle (31) zumindest eine Druckluftübergabeöffnung (41) zur Versorgung einer jeweiligen Lamelle (31) mit Druckluft aufweist.

15. Werkstückbearbeitungsvorrichtung (1) nach einem der Ansprüche 1 bis 14, **dadurch gekennzeichnet, dass** das Auflageelement (30) einen Handgriff (47) zur händischen Bedienung des Auflageelements (30) aufweist.
